# EUROPEAN PATENT APPLICATION

(11) **EP 2 782 218 A2**
(43) Date of publication of application: **24.09.2014**
(21) Application number: 14159764.1
(22) Date of filing: 14.03.2014
(51) Int. Cl.: H02K 3/12

(54) **Coil, rotating electrical machine, and manufacturing method thereof**

(30) Priority: 19.03.2013 JP 2013056299
(71) Applicant: Kabushiki Kaisha Yaskawa Denki, Kitakyushu-shi, Fukuoka 806-0004 (JP)
(72) Inventor: Tomohara, Kenji, Kitakyushu-shi, Fukuoka 806-0004 (JP); Maemura, Akihiko, Kitakyushu-shi, Fukuoka 806-0004 (JP); Inoue, Takeshi, Kitakyushu-shi, Fukuoka 806-0004 (JP); Adachi, Norimasa, Kitakyushu-shi, Fukuoka 806-0004 (JP); Yasukawa, Junichi, Kitakyushu-shi, Fukuoka 806-0004 (JP)
(74) Representative: Viering, Jentschura & Partner Patent- und Rechtsanwälte

(57) **Abstract**

A coil (30, 40, 50) includes: a coil main body (30, 40, 50) in which one coil end in an axial direction is bent to an inner peripheral side of a stator core (1a) including a tooth (12) having an protrusion preventing portion (12a) configured to prevent the coil (30, 40, 50) from protruding to the inner peripheral side of the stator core (1a); and a relief portion (35a, 43a, 54a, 61, 62) provided for a portion of the coil main body that is bent to the inner peripheral side of the stator core. The relief portion is configured to release the protrusion preventing portion of the tooth when the coil main body is inserted into a slot (11) of the stator core in the axial direction from one coil end in the axial direction that is bent to the inner peripheral side of the stator core.

## Description

### BACKGROUND

### 1. Technical Field

The present disclosure relates to a coil, a rotating electrical machine, and a manufacturing method for a rotating electrical machine.

### 2. Related Art

Some of known rotating electrical machines include a coil in which one coil end in an axial direction of a stator core is bent to an inner peripheral side of the stator core (see, for example, Japanese Patent No. 3928297). In the rotating electrical machine discussed in Japanese Patent No. 3928297, the coil is formed to have a shape bent in advance to the inner peripheral side of the stator core. This coil is attached to a slot of the stator core. In the rotating electrical machine disclosed in Japanese Patent No. 3928297, the slot is structured to have an approximately rectangular shape when viewed from the axial direction. In the approximately rectangular shape, the slot has an inner peripheral side portion with a circumferential width approximately the same as the circumferential width of the other portion.

Among conventional slots, there is known slot having an inner peripheral side portion with a circumferential width shorter than the circumferential width of the other portion (the width of a coil) when viewed from the axial direction. This slot is provided with a coil projection preventing portion. In other words, the opening of this slot on the inner peripheral side is smaller than the width of the coil. This opening is provided with a coil projection preventing wedge. This prevents or suppresses the projection of the stator core of the coil to the inner peripheral side.

A coil, which has a shape previously bent to the inner peripheral side of the stator core as described in Japanese Patent No. 3928297, may be inserted into the conventional slot provided with the coil protrusion preventing portion from, for example, the slot inner peripheral side. In this case, the coil is made thinner than the opening on the slot inner peripheral side. The coil is provided in the form of a bundle of fine wires, and the coil is thus hardly inserted into the slot. Alternatively, the coil may be inserted into the slot in the axial direction of the stator core from the side where the coil is bent to the inner peripheral side. In this case, the opening width of the slot is smaller than the width of the coil. In some cases, therefore, the coil cannot be inserted into the slot because part of the coil is bent to the inner peripheral side of the stator core and brought into contact with the opening of the slot. Alternatively, a groove may be formed in an end of a tooth and the coil projection preventing wedge may be then inserted into the groove. In this case, however, the groove makes the tooth width smaller, causing an increase in loss of the magnetic circuit.

An object of the present invention is to provide a coil, a rotating electrical machine, and a manufacturing method for the rotating electrical machine in which one end of the coil main body in an axial direction is bent to the inner peripheral side of a stator core so as to be easily inserted into the slot in the axial direction.

### SUMMARY

A coil includes: a coil main body in which one coil end in an axial direction is bent to an inner peripheral side of a stator core including a tooth having an protrusion preventing portion configured to prevent the coil from protruding to the inner peripheral side of the stator core; and a relief portion provided for a portion of the coil main body that is bent to the inner peripheral side of the stator core. The relief portion is configured to release the protrusion preventing portion of the tooth when the coil main body is inserted into a slot of the stator core in the axial direction from one coil end in the axial direction that is bent to the inner peripheral side of the stator core.

### BRIEF DESCRIPTION OF DRAWINGS

FIG. 1 is a perspective diagram schematically illustrating the entire structure of an electrical machine according to this embodiment;
FIG. 2 is a perspective diagram illustrating a U-phase coil of the electrical machine according to this embodiment;
FIG. 3 is a perspective diagram illustrating a V-phase coil of the electrical machine according to this embodiment;
FIG. 4 is a perspective diagram illustrating a W-phase coil of the electrical machine according to this embodiment;
FIG. 5 is a schematic diagram illustrating the coil arrangement in which the stator of the electrical machine illustrated in FIG. 1 is developed in a planar view and which is viewed from the outside in the radial direction;
FIG. 6 is a schematic diagram for describing the structure of the coil of each phase of the electrical machine illustrated in FIG. 1;
FIG. 7 is a schematic diagram in which the coil of the electrical machine according to this embodiment is viewed from above;
FIG. 8 is a top view (schematic diagram) illustrating the state in which the coil of the electrical machine according to this embodiment is inserted into the slot from above in the axial direction;
FIG. 9 is a perspective diagram illustrating the state in which the coil (V-phase coil) of the electrical machine according to this embodiment is inserted into the slot from above in the axial direction;
FIG. 10 is a schematic top view of the coil of the electrical machine according to a first modified example of this embodiment is viewed from above; and
FIG. 11 is a schematic top view of the coil of the electrical machine according to a second modified example of this embodiment is viewed from above.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A coil according to a first aspect includes: a coil main body in which one coil end in an axial direction is bent to an inner peripheral side of a stator core including a tooth having an protrusion preventing portion configured to prevent the coil from protruding to the inner peripheral side of the stator core; and a relief portion provided for a portion of the coil main body that is bent to the inner peripheral side of the stator core. The relief portion is configured to release the protrusion preventing portion of the tooth when the coil main body is inserted into a slot of the stator core in the axial direction from one coil end in the axial direction that is bent to the inner peripheral side of the stator core.

In the coil according to the first aspect, the coil main body is inserted into the slot of the stator core in the axial direction from, for example, one coil end in the axial direction bent to the inner peripheral side of the stator core. A relief portion for releasing the protrusion preventing portion of the tooth at this insertion is provided for the portion of the coil main body bent to the inner peripheral side of the stator core. Thus, the protrusion preventing portion that interrupts the insertion of the coil main body into the slot can be released by the relief portion. As a result, the coil main body in which one coil end in the axial direction is bent to the inner peripheral side of the stator core can be easily inserted into the slot in the axial direction.

A rotating electrical machine according to a second aspect includes: the coil according to the first aspect; and a stator core including a tooth having a protrusion preventing portion configured to prevent the coil from projecting to an inner peripheral side of a stator core.

In the rotating electrical machine according to the second aspect, the coil main body is inserted into the slot of the stator core in the axial direction from, for example, one coil end in the axial direction bent to the inner peripheral side of the stator core. A relief portion for releasing the protrusion preventing portion of the tooth at this insertion is provided for the portion of the coil main body bent to the inner peripheral side of the stator core. Thus, the protrusion preventing portion that interrupts the insertion of the coil main body into the slot can be released by the relief portion. As a result, the coil main body in which one coil end in the axial direction is bent to the inner peripheral side of the stator core can be easily inserted into the slot in the axial direction.

A manufacturing method for a rotating electrical machine according to a third aspect includes: preparing a stator core including a tooth having a protrusion preventing portion configured to prevent a coil from projecting to an inner peripheral side of a stator core; preparing a coil that includes a coil main body in which one coil end in an axial direction is bent to the inner peripheral side of the stator core, and includes a relief portion for releasing the protrusion preventing portion of the tooth, which is provided for the portion of the coil main body bent to the inner peripheral side of the stator core; and inserting the coil main body into a slot of the stator core in the axial direction from one coil end in the axial direction bent to the inner peripheral side of the stator core while the protrusion preventing portion of the tooth is released by the relief portion.

In the manufacturing method for the rotating electrical machine according to the third aspect, while the protrusion preventing portion of the tooth is released by the relief portion as above, the coil main body is inserted into the slot of the stator core in the axial direction from one coil end in the axial direction bent to the inner peripheral side of the stator core. Thus, the protrusion preventing portion that interrupts the insertion of the coil main body into the slot can be released by the relief portion. As a result, the coil main body in which one coil end in the axial direction is bent to the inner peripheral side of the stator core can be easily inserted into the slot in the axial direction.

According to the coil, the rotating electrical machine, and the manufacturing method for the rotating electrical machine described above, the coil main body in which one coil end in the axial direction is bent to the inner peripheral side of the stator core can be easily inserted into the slot in the axial direction.

An embodiment is hereinafter described with reference to the drawings.

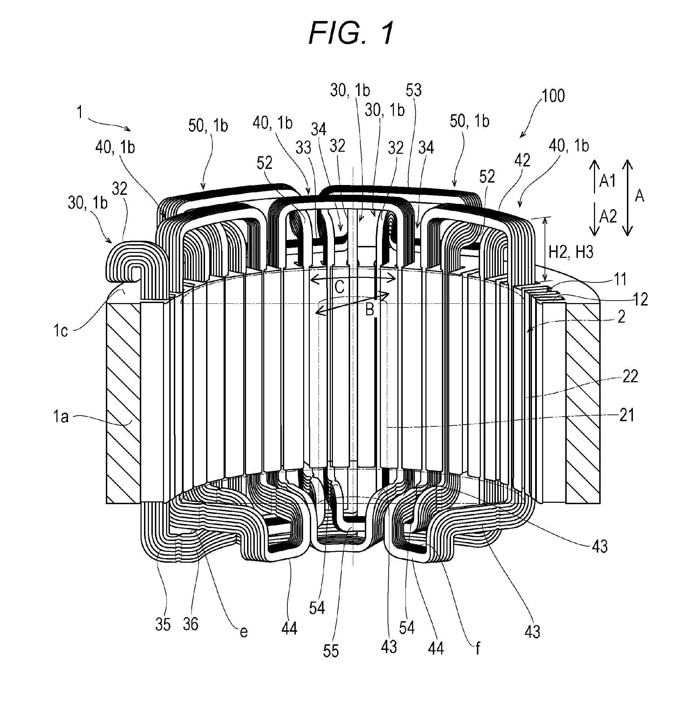

First, a description will be given of a constitution of an electric motor 100 according to this embodiment with reference to Fig. 1 to Fig. 7. This embodiment describes the radial electric motor 100 as an exemplary rotating electrical machine.

As illustrated in Fig. 1, the electric motor 100 includes a stator 1, which is a stating unit, and a rotor 2, which is a rotating unit (see the one dot chain line). The rotor 2 includes a shaft 21 (see the one dot chain line), a rotor core 22 (see the one dot chain line), and a plurality of permanent magnets (not illustrated). The rotor 2 is rotatable around the shaft 21.

The stator 1 includes a stator core 1a and a plurality of coils 1b. The stator core 1a includes a plurality of slots 11. The plurality of coils 1b is mounted to the respective slots 11. The stator core 1a is formed in a cylindrical shape. The stator core 1a includes a plurality of teeth 12 that extend to inside in a radial direction B at the inner peripheral side of the stator core 1a. The teeth 12 are equiangularly spaced in a circumferential direction C of the stator core 1a. The slots 11 are disposed between these teeth 12.

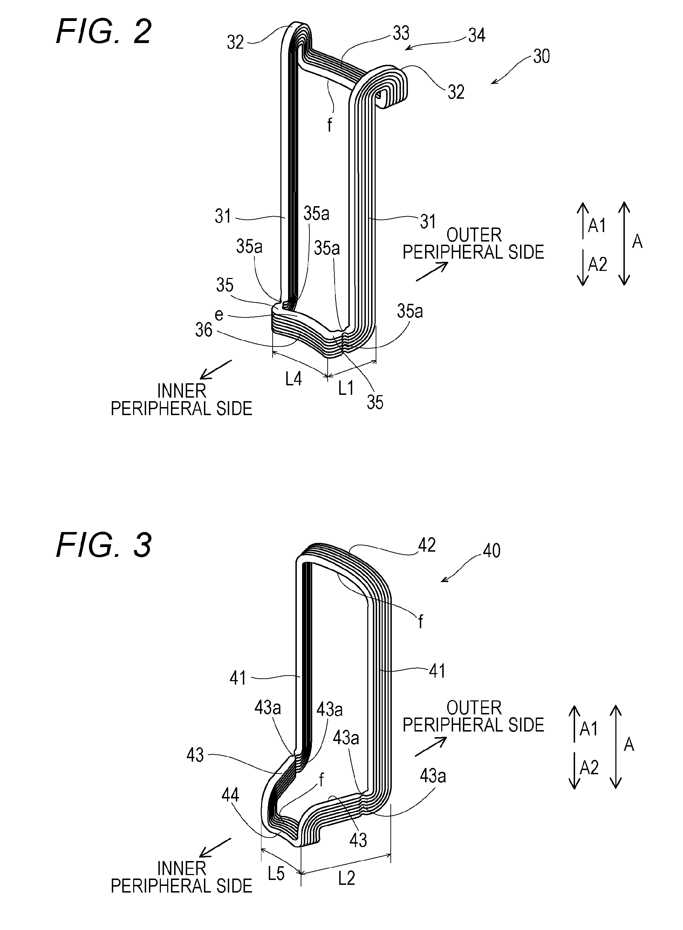

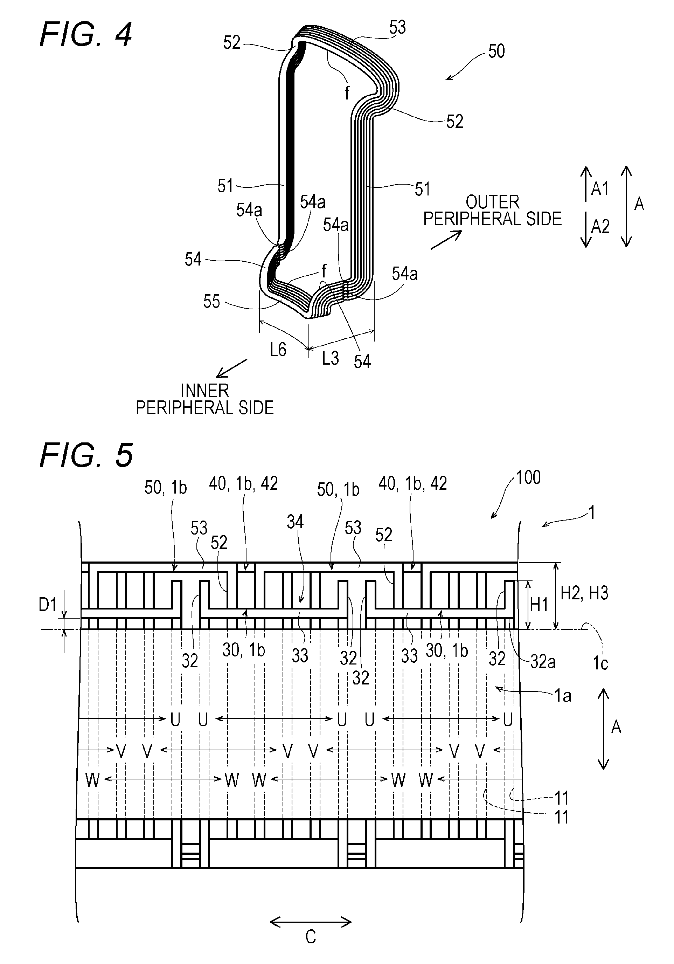

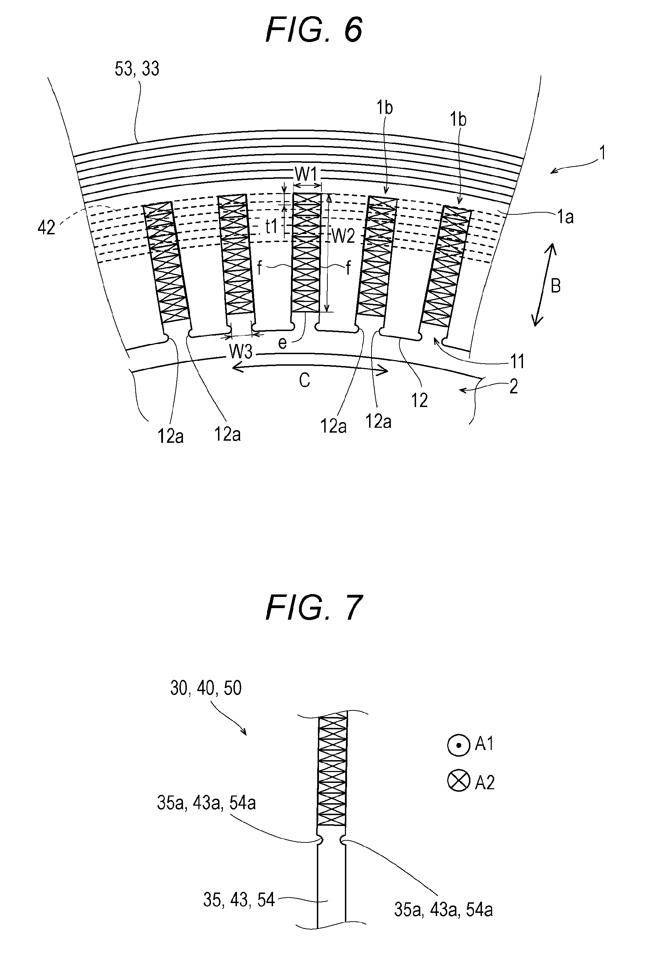

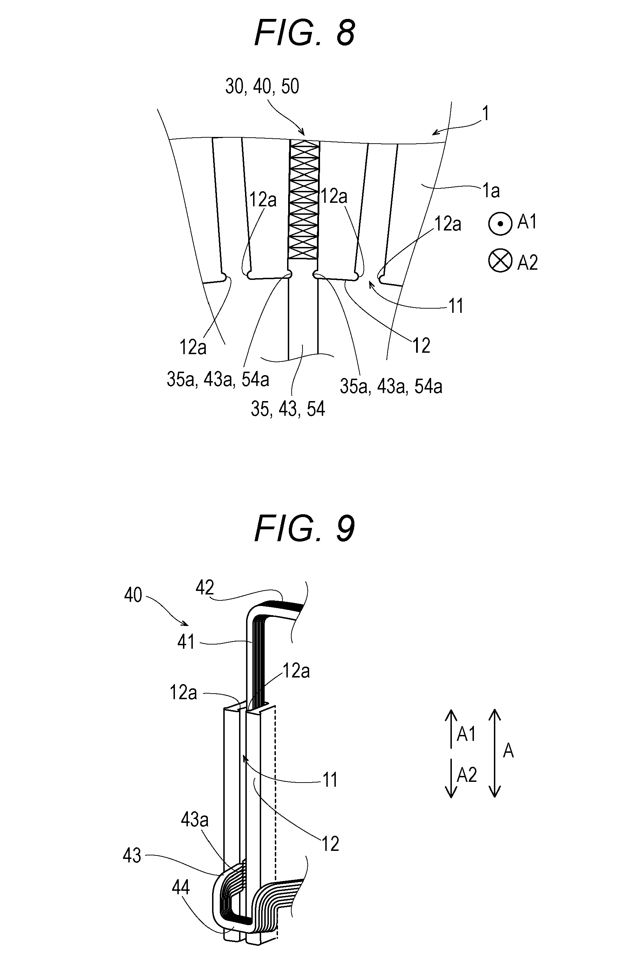

In this embodiment, as illustrated in FIG. 6, the tooth 12 of the stator core 1a is provided with a protrusion preventing portion 12a for preventing or suppressing the projection of the coil 1b to the inner peripheral side of the stator core 1a. Specifically, the protrusion preventing portion 12a includes a protrusion formed to protrude from an end of the tooth 12 on the inner peripheral side into the slot 11 in the circumferential direction when viewed from the axial direction. Note that the protrusion preventing portion 12a (protrusion) has a shape of, for example, an approximately semicircle when viewed from the axial direction. The protrusion preventing portion 12a is formed so as to protrude into the slot 11 from one side end face and the other side end face in the circumferential direction of the tooth 12. Thus, the width W3 of the portion of the slot 11 on the inner peripheral side in the circumferential direction is smaller than the width W1 (coil width W1) of the other portion of the slot in the circumferential direction when viewed from the axial direction. As a result, the protrusion preventing portion 12a prevents the side portion of the coil 1b, which is described later, from projecting to the inner peripheral side of the stator core 1a. Note that the side portion of the coil 1b includes a coil side portion 31 of a U-phase coil 30 (see FIG. 2), a coil side portion 41 of a V-phase coil 40 (see FIG. 3), and a coil side portion 51 of a W-phase coil (see FIG. 4). The protrusion preventing portion 12a is formed to extend from one end portion side of the slot 11 in the axial direction (A1-direction side) to the other end portion side (A2-direction side) as illustrated in FIG. 9.

The electric motor 100 is a three-phase AC current rotating electrical machine. In the electric motor 100, three-phase coils are mounted to the respective slots 11 by concentric winding among distributed winding. For example, the electric motor 100 includes the rotating electrical machine with eight poles and 48 slots. This rotating electrical machine has the number of slots q : q = 2 (= 48/(3 x 8)) in every pole and every phase. The plurality of coils 1b include three types of coils: a U-phase coil 30, a V-phase coil 40, and a W-phase coil 50 corresponding to each phase of the three-phase AC current. As illustrated in Fig. 2 to Fig. 4, the U-phase coil 30, the V-phase coil 40, and the W-phase coil 50 have shapes different from one another. The detail of the shape of each coil will be described later. The U-phase coil 30 is an example of "coil", "coil main body" and "a first coil main body". The V-phase coil 40 is an example of "coil", "coil main body" and "a second coil main body". The W-phase coil 50 is an example of "coil", "coil main body" and "a third coil main body".

An exemplary coil arrangement in concentric winding is illustrated in Fig. 5. One coil 1b occupies the two different slots 11 spaced from each other (four slots in Fig. 5). One side of the adjacent two coils 1b in different phases are each disposed in the slot 11 between the coils 1b. In view of this, each coil 1b includes two slots for each of the U-phase coil 30, the V-phase coil 40, and the W-phase coil 50 in the order from the right side in Fig. 5.

As illustrated in Fig. 6, each coil 1b is a flat strip-shaped edgewise coil around which a flat conductive wire is wrapped and laminated. Specifically, the flat conductive wire has an approximately rectangular cross section with width W1 and thickness t1 (W1 > t1) in cross section. The flat conductive wires are laminated in the slot 11 in one row in a thickness direction. Thus, the coil 1b includes a laminated surface f and an end face e in the laminated direction. The laminated surface f is formed by lamination of the flat conductive wire. Lamination width W2 of the laminated surface f is approximately equal to the thickness t1 of flat conductive wire x the number of laminations. The width of the end face e (thickness of the coil 1b) is approximately equal to the width W1 of the flat conductive wire. As illustrated in Fig. 1, the coils 1b inside of the slots 11 each have coil ends. The coil ends are parts projecting (exposed) from both ends in an axial direction A of the stator core 1a (the slot 11) to the axial direction.

Next, coils in each phase will be specifically described. In the following description, the axial direction A of the cylindrical-shaped stator core 1a is denoted as an "axial direction." The radial direction B of the stator core 1a is denoted as a "radial direction." The circumferential direction C of the stator core 1a is denoted as a "circumferential direction."

As illustrated in Fig. 1 and Fig. 2, the U-phase coil 30 includes a pair of coil sides 31, a pair of bent portions 32, and a coupler 33. The pair of coil sides 31 is inserted into the respective different slots 11. The pair of bent portions 32 is disposed at the other side of the coil end in the axial direction of the stator core 1a (A1 direction side). The pair of bent portions 32 is continuous from the pair of coil sides 31. The coupler 33 couples the pair of bent portions 32.

The pair of bent portions 32 has the same shape. Specifically, as illustrated in Fig. 1, the bent portion 32 is formed as follows. The coil sides 31 projecting from the slot 11 in the axial direction are bent back to the outside in the radial direction at the coil end. Additionally, tip faces of the bent portions 32 are bent back to an end face 1c at the axial direction of the stator core 1a (hereinafter denoted as the core end face 1c) side

(see Fig. 1). That is, the bent portion 32 is formed by bending back the coil sides 31, which project from the slots 11 in the axial direction, to the outside in the radial direction in an approximately U shape at the coil ends (see Fig. 1). As illustrated in Fig. 5, projection height of the bent portion 32 from the core end face 1c (maximum height) is H1. As illustrated in Fig. 5, the bent portion 32 is formed as follows. A tip face 32a of the bent portion 32 faces the stator core 1a at a position of a distance D1 (D1 < H1). The distance D1 is a position at the proximity of the core end face 1c of the stator core 1a.

As illustrated in Fig. 1 and Fig. 2, the coupler 33 extends in the circumferential direction of the stator core 1a. For example, the coupler 33 extends in an arc shape in the circumferential direction of the stator core 1a. The coupler 33 couples the tips of the bent portions 32 near the core end face 1c. The coupler 33 is disposed such that the laminated surface f of the edgewise coil faces the core end face 1c and is approximately parallel to the core end face 1c. The coil end of the U-phase coil 30 forms a concave portion 34 viewed from the radial direction. The concave portion 34 includes the pair of bent portions 32 and the coupler 33. The concave portion 34 is open to the outside in the axial direction. As illustrated in Fig. 1 and Fig. 5, at the inside of the concave portion 34, a part of a coil end of different coil (the W-phase coil 50) is disposed.

As illustrated in Fig. 2, the U-phase coil 30 includes a pair of bent portions 35 and a coupler 36 at one side of the coil end in the axial direction of the stator core 1a (A2 direction side). The pair of bent portions 35 is bent in an approximately L shape to the inside in the radial direction. The coupler 36 couples among the pair of bent portions 35. The U-phase coil 30 is bent to the radial direction of the stator core 1a in the direction that the flat conductive wire is laminated. The U-phase coil 30 is bent to have a different shape from the V-phase coil 40 and the W-phase coil 50. In addition, in this embodiment, the U-phase coil 30 (the coupler 36) is bent to the inside in the radial direction at the coil end at one side in the axial direction of the stator core 1a (the A2 direction side). Moreover, the U-phase coil 30 can be inserted to the slot 11 from the coil end side at one side in the axial direction of the stator core 1a (the A2 direction) in the axial direction of the stator core 1a.

The U-phase coil 30 includes a relief portion 35a. The relief portion 35a is provided for a portion of the U-phase coil 30 bent to the inner peripheral side of the stator core 1a. The U-phase coil 30 is inserted into the slot 11 of the stator core 1a in the axial direction from, for example, the side of one coil end in the axial direction bent to the inner peripheral side of the stator core 1a (that is, from the bottom of the U-phase coil 30). The relief portion 35a functions to release the protrusion preventing portion 12a of the tooth 12 at this insertion. Specifically, the relief portion 35a is provided for each of the pair of bent portions 35 of the U-phase coil 30. As aforementioned, the protrusion preventing portion 12a includes the protrusion configured to protrude into the slot 1 when viewed from the axial direction. As illustrated in FIG. 7, the relief portion 35a of the U-phase coil 30 includes a depression corresponding to the protrusion of the protrusion preventing portion 12a. The relief portion 35a including the depression has, for example, an approximately semicircular shape so as to correspond to the shape (approximately semicircular shape) of the protrusion preventing portion 12a including the protrusion when viewed from the axial direction.

In this embodiment, as illustrated in FIG. 2, the depression of the relief portion 35 of the U-phase coil 30 is in the form of a groove that extends to pass through one end portion side of the portion (bent portion 35) of the U-phase coil 30 bent to the inner peripheral side of the stator core 1a (A1-direction side) to the other end portion side (A2-direction side). In the portion (bent portion 35) of the U-phase coil 30 bent to the inner peripheral side of the stator core 1a, a flat conductive wire is laminated in the axial direction of the stator core 1a. The depression of the relief portion 35a of the U-phase coil 30 is provided across the flat conductive wire (in the axial direction). The U-phase coil 30 is inserted into the slot 11 of the stator core 1a in the axial direction from, for example, one coil end in the axial direction of the coil bent to the inner peripheral side of the stator core 1a. At the time of the insertion, as illustrated in FIG. 2 and FIG. 7, the relief portion 35a of the U-phase coil 30 relieves the protrusion preventing portion 12a configured to protrude into the slot 11 from one side end face and the other side end face of the tooth 12 in the circumferential direction. For this reason, the relief portion 35a is formed in one side face and the other side face in the circumferential direction of the portion (bent portion 35) of the U-phase coil 30 bent to the inner peripheral side of the stator core 1a.

An amount of projection L1 of the bent portion 35 to the inside in the radial direction of the stator core 1a is the smallest compared with an amount of projection L2 of the bent portion 43 of the V-phase coil 40 to the inside in the radial direction (see Fig. 3) and an amount of projection L3 of the bent portion 54 of the W-phase coil 50 to the inside in the radial direction (see Fig. 4). The amount of projection is referred to as length of the end of the bent portion 35 from the outside to the inside in the radial direction. The V-phase coil 40 and the W-phase coil 50 will be described later.

The coupler 36 extends in the circumferential direction of the stator core 1a. For example, the coupler 36 extends in an arc shape in the circumferential direction of the stator core 1a. Length L4 of the coupler 36 in the circumferential direction is the longest compared with length L5 of the coupler 44 of the V-phase coil 40 in the circumferential direction (see Fig. 3) and length L6 of the coupler 55 of the W-phase coil 50 in the circumferential direction (see Fig. 4). The coupler 36 is disposed such that the end face e of the edgewise coil faces the axial direction and opposes the end face in the axial direction of the rotor 2.

As illustrated in Fig. 1 and Fig. 3, the V-phase coil 40 includes a coupler 42 at the other side of the coil end (the A1 direction side). The coupler 42 directly couples tips of a pair of coil sides 41 projecting from the slots 11 in the axial direction at the other side of the coil end. The coupler 42 is formed extending in the circumferential direction of the stator core 1a over the bent portion 32 of the U-phase coil 30 and the bent portion 52 of the W-phase coil 50, which will be described later. For example, the coupler 42 extends in an arc shape in the circumferential direction of the stator core 1a. The coupler 42 is disposed such that the laminated surface f of the edgewise coil faces the axial direction and opposes the end face in the axial direction of the rotor 2. Projection height of the coupler 42 from the core end face 1c is H2 (see Fig. 5).

The V-phase coil 40 includes a pair of bent portions 43 and a coupler 44 at one side of the coil end (the A2 direction side). The coupler 44 couples the tips of the pair of bent portions 43. The pair of bent portions 43 has an approximately S shape. The V-phase coil 40 is bent to the radial direction of the stator core 1a in the direction that the flat conductive wire is laminated. In addition, in this embodiment, the V-phase coil 40 is bent so as to have a different shape from the U-phase coil 30 and the W-phase coil 50. The V-phase coil 40 is bent to the inside in the radial direction at the coil end at one side in the axial direction of the stator core 1a (the A2 direction side). Moreover, the V-phase coil 40 can be inserted to the slot 11 from the coil end side at one side in the axial direction of the stator core 1a (the A2 direction side) in the axial direction of the stator core 1a.

The V-phase coil 40 includes a relief portion 43a. The relief portion 43a is provided for a portion of the V-phase coil 40 bent to the inner peripheral side of the stator core 1a. The V-phase coil 40 is inserted into the slot 11 of the stator core 1a in the axial direction from, for example, the side of one coil end in the axial direction bent to the inner peripheral side of the stator core 1a (that is, from the bottom of the V-phase coil 40). The relief portion 43a functions to release the protrusion preventing portion 12a of the tooth 12 at this insertion. Specifically, the relief portion 43a is provided for each of the pair of bent portions 43 of the V-phase coil 40. As aforementioned, the protrusion preventing portion 12a includes the protrusion configured to protrude into the slot 11 when viewed from the axial direction. As illustrated in FIG. 7, the relief portion 43a of the V-phase coil 40 includes a depression corresponding to the protrusion of the protrusion preventing portion 12a. The relief portion 43a including the depression has, for example, an approximately semicircular shape so as to correspond to the shape (approximately semicircular shape) of the protrusion preventing portion 12a including the protrusion when viewed from the axial direction.

In this embodiment, as illustrated in FIG. 3, the depression of the relief portion 43a of the V-phase coil 40 is in the form of a groove that extends to pass through one end portion side of the portion (bent portion 43) of the V-phase coil 40 bent to the inner peripheral side of the stator core 1a (A1-direction side) to the other end portion side (A2-direction side). In the portion (bent portion 43) of the V-phase coil 40 bent to the inner peripheral side of the stator core 1a, a flat conductive wire is laminated in the axial direction of the stator core 1a. The depression of the relief portion 43a of the V-phase coil 40 is provided across the flat conductive wire (in the axial direction). The V-phase coil 40 is inserted into the slot 11 of the stator core 1a in the axial direction from, for example, one coil end in the axial direction bent to the inner peripheral side of the stator core 1a. As illustrated in FIG. 3 and FIG. 7, at this insertion, the relief portion 43a of the V-phase coil 40 releases the protrusion preventing portion 12a configured to protrude into the slot 11 from one side end face and the other side end face of the tooth 12 in the circumferential direction. For this reason, the relief portion 43a is formed on one side face and the other side face in the circumferential direction of the portion (bent portion 43) of the V-phase coil 40 bent to the inner peripheral side of the stator core 1a.

The amount of projection L2 of the bent portion 43 to the inside in the radial direction of the stator core 1a is the largest compared with the amount of projection L1 of the bent portion 35 of the U-phase coil 30 to the inside in the radial direction (see Fig. 2) and the amount of projection L3 of the bent portion 54 of the W-phase coil 50 to the inside in the radial direction (see Fig. 4). The W-phase coil 50 will be described later. The bent portion 43 passes through the inside in the axial direction of the coupler 36 of the U-phase coil 30 without contacting the coupler 36. Therewith, the bent portion 43 passes through the inside in the axial direction of the bent portion 54 of the W-phase coil 50 without contacting the coupler 55 (see Fig. 4).

The length L5 of the coupler 44 in the circumferential direction is the shortest compared with the length L4 of the coupler 36 of the U-phase coil 30 in the circumferential direction (see Fig. 2) and the length L6 of the coupler 55 of the W-phase coil 50 in the circumferential direction (see Fig. 4). The coupler 44 is disposed such that the laminated surface f of the edgewise coil faces the axial direction and opposes the end face in the axial direction of the rotor 2.

As illustrated in Fig. 1 and Fig. 4, the W-phase coil 50 includes a pair of bent portions 52 and a coupler 53. The coupler 53 couples the pair of bent portions 52. The pair of bent portions 52 is continuous from a pair of coil sides 51 at the other side of the coil end (the A1 direction side). The pair of bent portions 52 is bent in an approximately S shape to the outside in the radial direction. The bent portion 52 is disposed such that the tip face of the bent portion 52 faces the opposite side from the core end face 1c (outside in the axial direction). The bent portion 52 is disposed in the concave portion 34 of the U-phase coil 30. The coupler 53 extends in the circumferential direction of the stator core 1a. For example, the coupler 53 extends in an arc shape in the circumferential direction of the stator core 1a. The coupler 53 is disposed so as to overlap the coupler 33 of the U-phase coil 30 in the axial direction. The coupler 53 is disposed such that the laminated surface f of the edgewise coil faces the axial direction and opposes the end face in the axial direction of the rotor 2. Projection height of the coupler 53 from the core end face 1c is H3 (see Fig. 5). In the first embodiment, H3 = H2 is met. Accordingly, at the other side of the coil end, the coupler 53 of the W-phase coil 50 and the coupler 42 of the V-phase coil 40 are disposed so as to be arranged in the radial direction (see Fig. 1).

The W-phase coil 50 includes a pair of bent portions 54 and a coupler 55. The coupler 55 couples the pair of bent portions 54. The pair of bent portions 54 is bent in an approximately S shape to the inside in the radial direction at one side of the coil end (the A2 direction side). The W-phase coil 50 is bent to the radial direction of the stator core 1a in the direction that the flat conductive wire is laminated. The W-phase coil 50 is bent to have a different shape from the U-phase coil 30 and V-phase coil 40. The W-phase coil 50 is bent to the inside in the radial direction at the coil end at one side in the axial direction of the stator core 1a (the A2 direction side). Moreover, the W-phase coil 50 can be inserted to the slot 11 from the coil end side at one side in the axial direction of the stator core 1a (the A2 direction side) in the axial direction of the stator core 1a.

The W-phase coil 50 includes a relief portion 54a. The relief portion 54a is provided for a portion of the W-phase coil 50 bent to the inner peripheral side of the stator core 1a. The W-phase coil 50 is inserted into the slot 11 of the stator core 1a in the axial direction from, for example, the side of one coil end in the axial direction bent to the inner peripheral side of the stator core 1a (that is, from the bottom of the W-phase coil 50). The relief portion 54a functions to release the protrusion preventing portion 12a of the tooth 12 at this insertion. Specifically, the relief portion 54a is provided for each of the pair of bent portions 54 of the W-phase coil 50. As aforementioned, the protrusion preventing portion 12a includes the protrusion configured to protrude into the slot 11 when viewed from the axial direction. As illustrated in FIG. 7, the relief portion 54a of the W-phase coil 50 includes a depression corresponding to the protrusion of the protrusion preventing portion 12a. The relief portion 54a including the depression has, for example, an approximately semicircular shape so as to correspond to the shape (approximately semicircular shape) of the protrusion preventing portion 12a including the protrusion when viewed from the axial direction.

In this embodiment, as illustrated in FIG. 4, the depression of the relief portion 54a of the W-phase coil 50 is in the form of a groove that extends to pass through one end portion side of the portion (bent portion 54) of the W-phase coil 50 bent to the inner peripheral side of the stator core 1a (A1-direction side) to the other end portion side (A2-direction side). In the portion (bent portion 54) of the W-phase coil 50 bent to the inner peripheral side of the stator core 1a, a flat conductive wire is laminated in the axial direction of the stator core 1a. The depression of the relief portion 54a of the W-phase coil 50 is provided across the flat conductive wire (in the axial direction). The W-phase coil 50 is inserted into the slot 11 of the stator core 1a in the axial direction from, for example, one coil end in the axial direction bent to the inner peripheral side of the stator core 1a. As illustrated in FIG. 4 and FIG. 7, at this insertion, the relief portion 54a of the W-phase coil 50 releases the protrusion preventing portion 12a configured to protrude into the slot 11 from one side end face and the other side end face of the tooth 12 in the circumferential direction. For this reason, the relief portion 54a is formed on one side face and the other side face in the circumferential direction of the portion (bent portion 54) of the W-phase coil 50 bent to the inner peripheral side of the stator core 1a.

The amount of projection L3 of the bent portion 54 to the inside in the radial direction of the stator core 1a is larger than the amount of projection L1 of the bent portion 35 of the U-phase coil 30 to the inside in the radial direction (see Fig. 2). Further, the amount of projection L3 of the bent portion 54 to the inside in the radial direction of the stator core 1a is smaller than the amount of projection L2 of the bent portion 43 of the V-phase coil 40 to the inside in the radial direction (see Fig. 3). That is, as illustrated in Fig. 1, viewing from the axial direction, the coupler 36 of the U-phase coil 30, the coupler 55 of the W-phase coil 50, and the coupler 44 of the V-phase coil 40 are disposed in this order from the outside to the inside in the radial direction.

The bent portion 54 passes through the inside in the axial direction of the coupler 36 of the U-phase coil 30 without contacting the coupler 36. As illustrated in Fig. 1, the U-phase coil 30, the V-phase coil 40, and the W-phase coil 50 do not contact but are intersect with one another at the coil ends at one side in the axial direction of the stator core 1a. That is, the U-phase coil 30, the V-phase coil 40, and the W-phase coil 50 are spaced at predetermined intervals.

The coupler 55 extends in the circumferential direction. The length L6 of the coupler 55 in the circumferential direction is shorter than the length L4 of the coupler 36 of the U-phase coil 30 in the circumferential direction (see Fig. 2). Further, the length L6 of the coupler 55 in the circumferential direction is longer than the length L5 of the coupler 44 of the V-phase coil 40 in the circumferential direction (see Fig. 3). The coupler 55 is disposed such that the laminated surface f of the edgewise coil faces the axial direction and opposes the end face in the axial direction of the rotor 2.

In this manner, in this embodiment, the relief portions 35a, 43a, and 54a are provided for the portions of the U-phase coil 30, the V-phase coil 40, and the W-phase coil 50 (i.e., the coils of all the phases) that are bent to the inner peripheral side of the stator core 1a, respectively. In the U-phase coil 30 and the W-phase coil 50, the other coil end (on the A1 side) in the axial direction is bent to the outer peripheral side of the stator core 1a.

Next, a manufacturing method for the electrical machine 100 is described with reference to FIG. 1 to FIG. 4 and FIG. 6 to FIG. 9.

First, as illustrated in FIG. 6, the stator core 1a is prepared. The tooth 12 of the stator core 1a is provided with the protrusion preventing portion 12a. This protrusion preventing portion 12a prevents or suppresses that the U-phase coil 30, the V-phase coil 40, and the W-phase coil 50 project to the inner peripheral side of the stator core 1a. Next, in this embodiment, the U-phase coil 30 (V-phase coil 40, W-phase coil 50) is prepared. In the U-phase coil 30 (V-phase coil 40, W-phase coil 50), one coil end in the axial direction is bent to the inner peripheral side of the stator core 1a as illustrated in FIG. 2 to FIG. 4 and FIG. 7. Moreover, the portion bent to the inner peripheral side (bent portion 35, bent portion 43, and bent portion 54) is provided with the relief portion 35a (relief portion 43a, relief portion 54a) for releasing the protrusion preventing portion 12a of the tooth 12. Note that the relief portion 35a (relief portion 43a, relief portion 54a) is formed using, for example, a chisel or the like after a coil with no relief portion is formed by winding and laminating the flat conductive wire. Then, as illustrated in FIG. 8 and FIG. 9 (the V-phase coil 40 is shown in FIG. 9), the U-phase coil 30 (V-phase coil 40, W-phase coil 50) is inserted into the slot 11 of the stator core 1a in the axial direction (to A2 direction) from one coil end in the axial direction bent to the inner peripheral side of the stator core 1a. At this insertion, the relief portion 35a (relief portion 43a, relief portion 54a) releases the protrusion preventing portion 12a of the tooth 12. After that, as illustrated in FIG. 1, the U-phase coil 30 (V-phase coil 40, W-phase coil 50) is inserted into the slot 11 until one coil end (relief portion 35a, relief portion 43a, relief portion 54a) of the U-phase coil 30 (V-phase coil 40, W-phase coil 50) is exposed below (A2 side) the stator core 1a. This completes the electrical machine 100.

In this embodiment, as described above, the U-phase coil 30 (V-phase coil 40, W-phase coil 50) is inserted into the slot 11 of the stator core 1a in the axial direction from one coil end in the axial direction bent to the inner peripheral side of the stator core 1a. The relief portion 35a (43a, 54a) for releasing the protrusion preventing portion 12a of the tooth 12 at this insertion is provided for the portion (bent portion 35, bent portion 43, bent portion 54) of the U-phase coil 30 (V-phase coil 40, W-phase coil 50) bent to the inner peripheral side of the stator core 1a. Thus, the relief portion 35a (43a, 54a) can release the protrusion preventing portion 12a that interrupts the insertion of the U-phase coil 30 (V-phase coil 40, W-phase coil 50) into the slot 11. As a result, the U-phase coil 30 (V-phase coil 40, W-phase coil 50) in which one coil end in the axial direction is bent to the inner peripheral side of the stator core 1a can be easily inserted into the slot in the axial direction.

In this embodiment, the protrusion preventing portion 12a includes the protrusion protruding into the slot 11 when viewed from the axial direction. The relief portion 35a (43a, 54a) of the U-phase coil 30 (V-phase coil 40, W-phase coil 50) includes the depression corresponding to the protrusion of the protrusion preventing portion 12a. Thus, the protrusion preventing portion 12a including the protrusion can be easily released by the relief portion 35a (43a, 54a) including the depression.

In this embodiment, as described above, the depression of the relief portion 35a (43a, 54a) of the U-phase coil 30 (V-phase coil 40, W-phase coil 50) is in the form of a groove that extends to pass through one end portion side of the portion (bent portion 35, bent portion 43, bent portion 54) of the U-phase coil 30 (V-phase coil 40, W-phase coil 50) that is bent to the inner peripheral side of the stator core 1a to the other end portion side. Differently from when the depression is formed not penetrating, this prevents the relief portion 35a (43a, 54a) from being caught in the protrusion preventing portion 12a including the protrusion. Thus, the U-phase coil 30 (V-phase coil 40, W-phase coil 50) can be easily inserted into the slot 11 of the stator core 1a in the axial direction.

In this embodiment, the U-phase coil 30 (V-phase coil 40, W-phase coil 50) is the band-like edgewise coil formed by winding and laminating a flat conductive wire as described above. The portion (bent portion 35, bent portion 43, bent portion 54) of the U-phase coil 30 (V-phase coil 40, W-phase coil 50) is formed by laminating a flat conductive wire in the axial direction of the stator core 1a. Moreover, the depression of the relief portion 35a (43a, 54a) of the U-phase coil 30 (V-phase coil 40, W-phase coil 50) is provided across the flat conductive wire. Thus, the relief portion 35a (43a, 54a) including the depression (with the groove-like shape) can be easily formed in the U-phase coil 30(V-phase coil 40, W-phase coil 50) including the flat conductive wire.

In this embodiment, as described above, the U-phase coil 30 (V-phase coil 40, W-phase coil 50) is inserted into the slot 11 of the stator core 1a in the axial direction from one coil end in the axial direction that is bent to the inner peripheral side of the stator core 1a. At this insertion, the relief portion 35a (43a, 54a) of the U-phase coil 30 (V-phase coil 40, W-phase coil 50) releases the protrusion preventing portion 12a configured to protrude into the slot 11 from one side end face and the other side end face of the tooth 12 in the circumferential direction. For this reason, the relief portion 35a (43a, 54a) is formed on one side face and the other side face in the circumferential direction of the portion (bent portion 35, bent portion 43, bent portion 54) of the U-phase coil 30 (V-phase coil 40, W-phase coil 50) that is bent to the inner peripheral side of the stator core 1a. The protrusion preventing portion 12a is thus formed on one side end face and the other side end face of the tooth 12 in the circumferential direction. Accordingly, the projection of the coil to the inner peripheral side of the slot 11 can be suppressed further. In other words, the U-phase coil 30 (V-phase coil 40, W-phase coil 50) can be easily inserted into the slot 11.

In this embodiment, as described above, the relief portion 35a, the relief portion 43a, and the relief portion 54a are provided respectively for the portions (bent portion 35, bent portion 43, bent portion 54) of the U-phase coil 30, the V-phase coil 40, and the W-phase coil 50 that are bent to the inner peripheral side of the stator core 1a. Thus, all the U-phase coil 30, the V-phase coil 40, and the W-phase coil 50 in each of which one coil end in the axial direction is bent to the inner peripheral side of the stator core 1a can be easily inserted into the slot 11.

In this embodiment, as described above, the other coil end in the axial direction of each of the U-phase coil 30 and the W-phase coil 50 is bent to the outer peripheral side of the stator core 1a. Thus, differently from when both one end and the other end of the coil in the axial direction are bent to the inner peripheral side of the stator core 1a, the rotor 2 can be easily inserted into the inner peripheral side of the stator 1.

Therefore, the above-disclosed embodiments are all considered as illustrative and not restrictive. The scope of the disclosure is indicated by the appended claims rather than by the foregoing description. All variations falling within the equivalency range of the appended claims are intended to be embraced therein.

For example, the embodiment described above employs an electric motor as an example of a rotating electrical machine. However, the rotating electrical machine of this disclosure may be a rotating electrical machine other than the electric motor such as a generator.

In the examples shown in the embodiment described above, edgewise coils around which the flat conductive wires are wrapped and laminated are employed. However, the coil of this disclosure may be a coil formed by bundling round wires.

In the example shown in the embodiment described above, the coil with the shape illustrated in Fig. 2 is configured as the U-phase coil, the coil with the shape illustrated in Fig. 3 as the V-phase coil, and the coil with the shape illustrated in Fig. 4 as the W-phase coil. However, the coil with the shape illustrated in Fig. 2 may be configured as the V-phase coil, the coil with the shape illustrated in Fig. 3 as the W-phase coil, and the coil with the shape illustrated in Fig. 4 as the U-phase coil. That is, it is only necessary that the coils with the same shape be in the same phase.

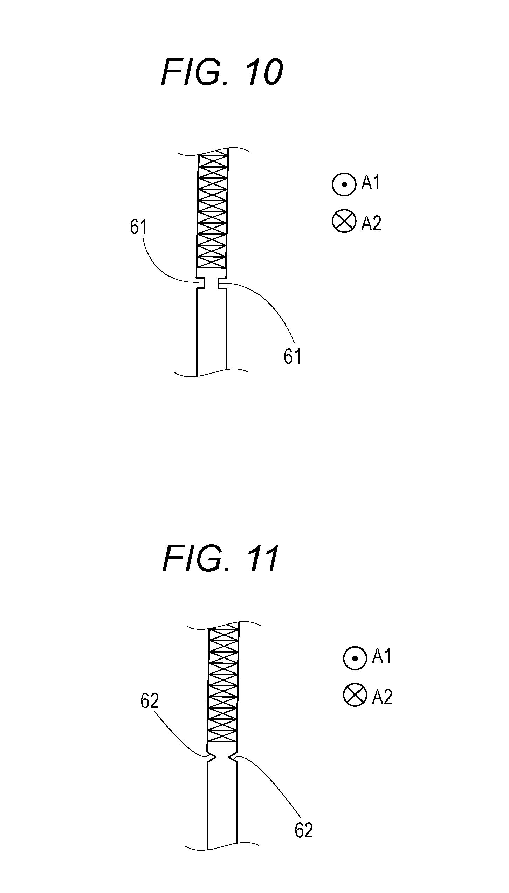

In the example described in the above embodiment, the relief portion is formed to have an approximately semicircular shape when viewed from the axial direction. The present invention, however, is not limited thereto and the relief portion may have any other shape than the semicircular shape. For example, as described in the first modified example illustrated in FIG. 10, the relief portion may be a relief portion 61 having an approximately rectangular shape. Moreover, as described in the second modified example illustrated in FIG. 11, the relief portion may be a relief portion 62 having an approximately triangular (wedge-like) shape.

In the example described in the above embodiment, the protrusion preventing portion is formed to have an approximately semicircular shape when viewed from the axial direction. The present invention, however, is not limited thereto and the protrusion preventing portion may have any other shape than the semicircular shape.

Moreover, in the example described in the above embodiment, the protrusion preventing portion is configured to protrude into the slot from one side end face and the other side end face of the tooth in the circumferential direction. Moreover, the relief portion is formed on one side face and the other side face in the circumferential direction of the portion of the coil that is bent to the inner peripheral side of the stator core. The present invention, however, is not limited thereto, and the protrusion preventing portion may be configured to protrude into the slot from any side end face of the tooth in the circumferential direction. Further, the relief portion may be formed on any side face in the circumferential direction in the portion of the coil that is bent to the inner peripheral side of the stator core.

In the example described in the above embodiment, in all the U-phase coil 30, the V-phase coil 40, and the W-phase coil 50, one coil end in the axial direction is bent to the inner peripheral side of the stator core. The present invention, however, is not limited thereto, and one coil end in a part of the coils may be bent to the inner peripheral side of the stator core. In this case, the relief portion may be provided for the coil in which one coil end in the axial direction is bent to the inner peripheral side of the stator core.

In the example described in the above embodiment, one coil end in the axial direction of the coil is bent twice in different directions to the inner peripheral side of the stator core. The other coil end in the axial direction of the coil is bent twice in different directions to the outer peripheral side of the stator core (W-phase coil 50) or is not bent at all (V-phase coil 40). The number of times of bending the coil (i.e., the shape of the coil end), however, is not limited thereto. In the above embodiment, one coil end in the axial direction of the coil is bent once to the inner peripheral side of the stator core. Moreover, the other coil end in the axial direction is bent twice in the same direction to the outer peripheral side of the stator core (U-phase coil 30). The number of times of bending the coil (i.e., the shape of the coil end), however, is not limited thereto. For example, one coil end in the axial direction of the coil (coil main body) may be bent once to the inner peripheral side of the stator core. Further, the other coil end in the axial direction of the coil (coil main body) may be bent once or may not be bent to the outer peripheral side of the stator core.

In the example shown in the embodiment described above, the projection height H2 of the coupler 42 of V-phase coil 40 from the core end face 1c is approximately equal to the projection height H3 of the coupler 53 of the W-phase coil 50 from the core end face 1c (H2 = H3). However, the projection height of the coupler from the core end face 1c is not limited to this. For example, the projection height H3 of the coupler 53 of the W-phase coil 50 from the core end face 1c may be shorter than the projection height H2 of the coupler 42 of V-phase coil 40 from the core end face 1c (H3 < H2). Alternatively, the projection height H3 of the coupler 53 of the W-phase coil 50 from the core end face 1c may be taller than the projection height H2 of the coupler 42 of V-phase coil 40 from the core end face 1c (H3 > H2).
The present disclosure may be represented by the following first to eighth coils, first rotating electric machine, and first manufacturing method for the rotating electrical machine.

A first coil is a coil configured to be able to be inserted into a slot of a stator core in an axial direction from one coil end in the axial direction of the stator core, the stator core having in a tooth an protrusion preventing portion for preventing the projection of the coil to an inner peripheral side of the stator core, wherein the coil includes: a coil main body in which one coil end in the axial direction is bent to the inner peripheral side of the stator core; and a relief portion that is provided for the portion of the coil main body that is bent to the inner peripheral side of the stator core and that releases the protrusion preventing portion of the tooth when the coil main body is inserted into the slot of the stator core in the axial direction from one coil end in the axial direction that is bent to the inner peripheral side of the stator core.

A second coil is the first coil wherein the relief portion of the coil main body includes a depression corresponding to a protrusion of the protrusion preventing portion, the protrusion being configured to protrude into the slot when viewed from the axial direction.

A third coil is the second coil wherein the depression of the relief portion of the coil main body is formed in the form of a groove that extends to pass through one end portion side to the other end portion side of the portion of the coil main body that is bent to the inner peripheral side of the stator core.

A fourth coil is the third coil wherein: the coil main body is a band-like edgewise coil formed by winding and laminating a flat conductive wire; the flat conductive wire is laminated in the axial direction of the stator core in the portion of the coil main body that is bent to the inner peripheral side of the stator core; and the depression of the relief portion of the coil main body is provided across the flat conductive wire.

A fifth coil is any one of the first to fourth coils wherein the relief portion of the coil main body is formed on both one side face and the other side face in the circumferential direction of the portion of the coil main body that is bent to the inner peripheral side of the stator core so that the protrusion preventing portion configured to protrude into the slot from one side end face and the other side end face of the tooth in the circumferential direction is released when the coil main body is inserted into the slot of the stator core in the axial direction from one coil end in the axial direction that is bent to the inner peripheral side of the stator core.

A sixth coil is any of the first to fifth coils wherein: the coil main body includes a first coil main body, a second coil main body, and a third coil main body configured to correspond to respective phases of three-phase alternating current; and the first coil main body, the second coil main body, and the third coil main body have portions bent to the inner peripheral side of the stator core, and the portions are provided with the relief portion.

A seventh coil is any of the first to sixth coils wherein: the coil main body includes a first coil main body, a second coil main body, and a third coil main body configured to correspond to respective phases of three-phase alternating current; and the other coil end in the axial direction of at least one of the first coil main body, the second coil main body, and the third coil main body is bent to the outer peripheral side of the stator core.

An eighth coil is any of the first to seventh coils wherein: one coil end of the coil main body in the axial direction is bent to the inner peripheral side of the stator core once or more; and the other coil end thereof in the axial direction is bent to the outer peripheral side of the stator core once or more or is not bent at all.

A first rotating electrical machine includes: a stator core in which an protrusion preventing portion for preventing the projection of a coil to an inner peripheral side of the stator core is provided in a tooth; and a coil that can be inserted into a slot of the stator core in an axial direction from one coil end of the stator core in the axial direction, the coil including: a coil main body in which one coil end in the axial direction is bent to the inner peripheral side of the stator core; and a relief portion that is provided for the portion of the coil main body that is bent to the inner peripheral side of the stator core and that releases the protrusion preventing portion of the tooth when the coil main body is inserted into the slot of the stator core in the axial direction from one coil end in the axial direction that is bent to the inner peripheral side of the stator core.

A first manufacturing method for a rotating electrical machine includes: preparing a stator core including in a tooth an protrusion preventing portion that prevents projection of a coil to an inner peripheral side of a stator core; preparing a coil that includes a coil main body in which one coil end in an axial direction is bent to the inner peripheral side of the stator core, and includes a relief portion for releasing an protrusion preventing portion of the tooth, which is provided for the portion of the coil main body that is bent to the inner peripheral side of the stator core; and inserting the coil main body into a slot of the stator core in the axial direction from one coil end in the axial direction that is bent to the inner peripheral side of the stator core while the protrusion preventing portion of the tooth is released by the relief portion.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A coil (30, 40, 50) comprising:
a coil main body (30, 40, 50) in which one coil end in an axial direction is bent to an inner peripheral side of a stator core (1a) including a tooth (12) having an protrusion preventing portion (12a) configured to prevent the coil (30, 40, 50) from protruding to the inner peripheral side of the stator core (1a); and
a relief portion (35a, 43a, 54a, 61, 62) provided for a portion of the coil main body that is bent to the inner peripheral side of the stator core, wherein the relief portion is configured to release the protrusion preventing portion of the tooth when the coil main body is inserted into a slot (11) of the stator core in the axial direction from one coil end in the axial direction that is bent to the inner peripheral side of the stator core.

2. The coil according to Claim 1, wherein:
the protrusion preventing portion includes a protrusion configured to protrude into the slot when viewed from the axial direction; and
the relief portion includes a depression corresponding to the protrusion of the protrusion preventing portion.

3. The coil according to Claim 2, wherein the depression of the relief portion is in the form of a groove that extends to pass through one end portion side to the other end portion side in the axial direction of the portion of the coil main body that is bent to the inner peripheral side of the stator core

4. The coil according to Claim 3, wherein:
the coil main body is a band-like edgewise coil formed by winding and laminating a flat conductive wire;
the flat conductive wire is laminated in the axial direction of the stator core in the portion of the coil main body that is bent to the inner peripheral side of the stator core; and
the depression of the relief portion is formed across the flat conductive wire.

5. The coil according to any one of Claims 1 to 4, wherein:
the coil main body is configured to be inserted into the slot of the stator core in the axial direction from one coil end in the axial direction that is bent to the inner peripheral side of the stator core;
the relief portion is formed on one side face and the other side face in the circumferential direction of the portion of the coil main body bent to the inner peripheral side of the stator core; and
the protrusion preventing portion configured to protrude into the slot from one side end face and the other side end face in the circumferential direction of the tooth is released when the coil main body is inserted into the slot.

6. The coil according to any one of Claims 1 to 5, wherein:
the coil main body includes a first coil main body (30), a second coil main body (40), and a third coil main body (50) configured to correspond to respective phases of three-phase alternating current; and
the first coil main body, the second coil main body, and the third coil main body have portions bent to the inner peripheral side of the stator core, and the portions are provided with the relief portion

7. The coil according to any one of Claims 1 to 6, wherein:
the coil main body includes a first coil main body (30), a second coil main body (40), and a third coil main body (50) configured to correspond to respective phases of three-phase alternating current; and
in at least one of the first coil main body, the second coil main body, and the third coil main body, the other coil end in the axial direction is bent to an outer peripheral side of the stator core.

8. The coil according to any one of Claims 1 to 7, wherein:
one coil end in the axial direction of the coil main body is bent at least one time to the inner peripheral side of the stator core; and
the other coil end in the axial direction of the coil main body is bent at least one time to the outer peripheral side of the stator core, or is not bent at all.

9. A rotating electrical machine comprising:
the coil (30, 40, 50) according to any one of Claims 1 to 8; and
a stator core including a tooth (12) having a protrusion preventing portion (12a) configured to prevent the coil from projecting to an inner peripheral side of a stator core (1a).

10. A manufacturing method for a rotating electrical machine, comprising:
preparing a stator core (1a) including a tooth (12) having a protrusion preventing portion (12a) configured to prevent a coil (30, 40, 50) from projecting to an inner peripheral side of a stator core (1a);
preparing a coil that includes a coil main body (30, 40, 50) in which one coil end in an axial direction is bent to the inner peripheral side of the stator core, and includes a relief portion (35a, 43a, 54a, 61, 62) for releasing the protrusion preventing portion of the tooth, which is provided for the portion of the coil main body bent to the inner peripheral side of the stator core; and
inserting the coil main body into a slot of the stator core in the axial direction from one coil end in the axial direction bent to the inner peripheral side of the stator core while the protrusion preventing portion of the tooth is released by the relief portion.
